# EUROPEAN PATENT APPLICATION

(11) **EP 4 654 305 A1**
(43) Date of publication of application: **26.11.2025**
(21) Application number: 24771101.3
(22) Date of filing: 05.03.2024
(51) Int. Cl.: H01M 8/04119

(54) **MEMBRANE HUMIDIFIER FOR FUEL CELL**

(30) Priority: 15.03.2023 KR 20230033774
(71) Applicant: Kolon Industries, Inc., Seoul 07793 (KR)
(72) Inventor: KIM, Do Woo, Seoul 07793 (KR); CHOI, Woo Chul, Seoul 07793 (KR); HER, Jung Kun, Seoul 07793 (KR); KI, Sung Kwan, Seoul 07793 (KR)
(74) Representative: Vossius & Partner Patentanwälte Rechtsanwälte mbB
(86) International application number: PCT/KR2024/002789
(87) International publication number: WO 2024/191101

(57) **Abstract**

Provided is a fuel cell membrane humidifier including a humidification module for humidifying gas to be supplied to a fuel cell stack, and an end cap coupled to one or the other side of the humidification module, wherein the humidification module includes a cartridge including an inner case in which a plurality of hollow fiber membranes are placed, and a fixing part that fixes the plurality of hollow fiber membranes on one side of the inner case, a midcase in which the cartridge is placed, and a first packing member inserted into a first insertion groove formed between the cartridge and the midcase to seal a gap between the cartridge and the midcase, and a first inclined part is provided on an outer side of the cartridge being in contact with the first packing member.

## Description

### Technical Field

The present disclosure relates to a fuel cell membrane humidifier, and more particularly, to a fuel cell membrane humidifier that may improve a sealing power of a packing member by forming an inclined part in each of a fixing part and an inner case of a cartridge, and a midcase.

### Background Art

A fuel cell is a power generation cell that generates electricity by combining hydrogen and oxygen with each other. Unlike general chemical cells such as batteries and storage batteries, fuel cells may continue to generate electricity as long as hydrogen and oxygen are supplied, and have the advantage of being twice as efficient as internal combustion engines because there is no heat loss.

A fuel cell system includes a stack, which is an electricity generation assembly of unit fuel cells each consisting of a cathode and an anode, an air supply device for supplying air to the cathode of each fuel cell, and a hydrogen supply device for supplying hydrogen to the anode of each fuel cell.

A polymer fuel cell of the fuel cell system requires adequate moisture to allow an ion exchange membrane of a membrane-electrode assembly (MEA) to function smoothly, and to this end, the air supply device of the fuel cell system is equipped with a humidifier for humidifying air supplied to the fuel cells.

The humidifier humidifies dry air supplied through an air compressor of the air supply device by using moisture in high-temperature and high-humidity air discharged from the cathode of the fuel cell, and supplies the humidified air to the cathode of the fuel cell.

The humidifier of the fuel cell uses a membrane humidification method. In the membrane humidification type humidifier, membrane humidification is performed through a gas-to-gas moisture exchange method of exchanging a high-temperature and high-humidity exhaust gas discharged from the cathode of the fuel cell with dry air supplied through the air compressor.

The membrane humidifier exchanges moisture between the high-temperature and high-humidity exhaust gas and dry air through a hollow fiber membrane. When exchanging moisture between the high-temperature and high-humidity exhaust gas and dry air, it is necessary to exchange moisture as the high-temperature and high-humidity exhaust gas and dry air pass through the hollow fiber membrane, to increase moisture exchange efficiency.

When the high-temperature and high-humidity exhaust gas and dry air do not pass through the hollow fiber membrane and come into direct contact with each other, there is a problem in that the moisture exchange efficiency is lowered. To this end, a packing member is used to divide a point where the high-temperature and high-humidity exhaust gas is introduced or discharged and a point where dry air is introduced or discharged from each other.

By dividing the point where the high-temperature and high-humidity exhaust gas is introduced or discharged and the point where dry air is introduced or discharged from each other, through the packing member, it is possible to prevent the high-temperature and humid exhaust gas and dry air from being in direct contact with each other without passing through the hollow fiber membrane.

However, if a sealing power of the packing member decreases, leakage may occur in the packing member, resulting in a problem in which the high-temperature and high-humidity exhaust gas and dry air come into direct contact with each other without passing through the hollow fiber membrane.

Therefore, when exchanging moisture between the high-temperature and high-humidity exhaust gas and dry air through the membrane humidifier, it is necessary to improve the sealing power of the packing member that divides the point where high-temperature and high-humidity exhaust gas is introduced or discharged and the point where dry air is introduced or discharged from each other.

### Disclosure of Invention

### Technical Problem

The present disclosure provides a fuel cell membrane humidifier, and more particularly, provides a fuel cell membrane humidifier that may improve a sealing power of a packing member by forming an inclined part in each of a fixing part and an inner case of a cartridge, and a midcase.

### Solution to Problem

According to an aspect of the present disclosure, a fuel cell membrane humidifier includes a humidification module for humidifying a gas to be supplied to a fuel cell stack, and an end cap coupled to one or the other side of the humidification module, wherein the humidification module includes a cartridge including an inner case in which a plurality of hollow fiber membranes are placed, and a fixing part that fixes the plurality of hollow fiber membranes on one side of the inner case, a midcase in which the cartridge is placed, and a first packing member inserted into a first insertion groove formed between the cartridge and the midcase to seal a gap between the cartridge and the midcase, and a first inclined part is provided on an outer side of the cartridge being in contact with the first packing member.

The first inclined part of the membrane humidifier for a fuel cell may have an inclination at one side of the cartridge so as to narrow a width of the first insertion groove in an inner direction of the cartridge.

The first inclined part of the membrane humidifier for a fuel cell may be provided in the fixing part of the cartridge or in the inner case of the cartridge.

The first packing member of the membrane humidifier for a fuel cell may include a first packing protrusion protruding to the outer side of the first packing member and being in contact with the first inclined part and the first inclined part may include a first inclined groove into which the first packing protrusion is inserted.

The first inclined part of the membrane humidifier for a fuel cell may include a first inclined protrusion protruding to the outer side of the first inclined part and being in contact with the first packing member, and the first packing member may include a first packing groove into which the first inclined protrusion is inserted.

An adhesive may be provided between the first packing member and the first inclined part of the membrane humidifier for a fuel cell, and the adhesive may be applied to one side of the first packing member, the other side of the first packing member, and at least one point between the first packing member and the first inclined part.

A first reinforcing member may be inserted into the first packing member of the membrane humidifier for a fuel cell and the first reinforcing member may have a higher hardness than the first packing member.

The end cap of the membrane humidifier for a fuel cell is provided with a pressing part protruding to an inner space of the end cap, and when the end cap is coupled to the humidification module, the pressing part may press the first packing member while being in contact with the first packing member.

A plurality of cartridges may be arranged inside the midcase of the membrane humidifier for a fuel cell, and the humidification module may include a second packing member inserted into a second insertion groove formed between the plurality of cartridges to seal a gap between the plurality of cartridges, and a second inclined part may be provided on an outer side of the cartridge being in contact with the second packing member.

The second inclined part of the membrane humidifier for a fuel cell, may have an inclination at one side of the cartridge so as to narrow a width of the second insertion groove in an inner direction of the cartridge.

The second inclined part of the membrane humidifier for a fuel cell may be provided in the fixing part of the cartridge or in the inner case of the cartridge.

The second packing member of the membrane humidifier for a fuel cell may include a second packing protrusion protruding to the outer side of the second packing member and being in contact with the second inclined part and the second inclined part may include a second inclined groove into which the second packing protrusion is inserted.

The second inclined part of the membrane humidifier for a fuel cell may include a second inclined protrusion protruding to the outer side of the second inclined part and being in contact with the second packing member, and the second packing member may include a second packing groove into which the second inclined protrusion is inserted.

An adhesive may be provided between the second packing member and the second inclined part of the membrane humidifier for a fuel cell, and the adhesive may be applied to one side of the second packing member, the other side of the second packing member, and at least one point between the second packing member and the second inclined part.

A second reinforcing member may be inserted into the second packing member of the membrane humidifier for a fuel cell and the second reinforcing member may have a higher hardness than the second packing member.

According to an aspect of the present disclosure, a fuel cell membrane humidifier includes a humidification module for humidifying a gas to be supplied to a fuel cell stack, and a first cap coupled to one end of the humidification module, wherein the humidification module includes a cartridge including an inner case in which a plurality of hollow fiber membranes are placed and a fixing part that fixes the plurality of hollow fiber membranes on one side of the inner case, a midcase to which the cartridge is coupled, and a first packing member inserted into a first insertion groove formed between the cartridge and the midcase to seal a gap between the cartridge and the midcase, and an inclined part is provided on an outer side of the midcase being in contact with the first packing member.

The inclined part of the membrane humidifier for a fuel cell may have an inclination at one side of the midcase so as to narrow the width of the first insertion groove in an inner direction of the midcase.

The first packing member of the membrane humidifier for a fuel cell may include a packing protrusion protruding to the outer side of the first packing member and being in contact with the inclined part and the inclined part may include an inclined groove into which the packing protrusion is inserted.

The inclined part of the membrane humidifier for a fuel cell may include an inclined protrusion protruding to the outer side of the inclined part and being in contact with the first packing member, and the first packing member may include a packing groove into which the inclined protrusion is inserted.

An adhesive may be provided between the first packing member and the inclined part of the membrane humidifier for a fuel cell and the adhesive may be applied to the other side of the first packing member, and at least one point between the first packing member and the inclined part.

A first reinforcing member may be inserted into the first packing member of the membrane humidifier for a fuel cell and the first reinforcing member may have a higher hardness than the first packing member.

The first cap of the membrane humidifier for a fuel cell is provided with a pressing part protruding to an inner space of the first cap, and when the first cap is coupled to the humidification module, the pressing part may press the first packing member while being in contact with the first packing member.

### Advantageous Effects of Invention

The present disclosure relates to a fuel cell membrane humidifier, and the fuel cell membrane humidifier may improve a sealing power of a packing member by forming an inclined part in each of a fixing part and an inner case of a cartridge, and a midcase.

The present disclosure has an advantage in that the inclined parts formed in the fixed part and the inner case of the cartridge, and the midcase may closely fit the packing member between the cartridge and the midcase and between the cartridge and the cartridge, thereby improving the sealing power of the packing member.

### Brief Description of Drawings

FIG. 1 is an exploded perspective view of a membrane humidifier for a fuel cell according to an embodiment of the present disclosure.
FIG. 2 is an exploded cross-sectional view of a membrane humidifier for a fuel cell according to an embodiment of the present disclosure, taken along line A-A of FIG. 1.
FIG. 3 is a combined cross-sectional view of a membrane humidifier for a fuel cell according to an embodiment of the present disclosure, taken along line A-A of FIG. 1.
FIG. 4 is a view showing that a first inclined part is provided in a fixing part of a cartridge according to an embodiment of the present disclosure.
FIG. 5 is a view showing that a first inclined part is provided in an inner case of a cartridge according to an embodiment of the present disclosure.
FIG. 6 is a view showing that a first inclined part is provided in a fixing part and an inner case of a cartridge according to an embodiment of the present disclosure.
FIG. 7 is a view showing that an inclined part is provided in a midcase according to an embodiment of the present disclosure.
FIG. 8 is a view illustrating that a first inclined part is provided in a cartridge and a second inclined part is provided in a midcase according to an embodiment of the present disclosure.
FIG. 9 is a view illustrating that a plurality of cartridges are arranged inside a midcase according to an embodiment of the present disclosure.
FIG. 10 is a view showing that a second inclined part is provided in a fixing part of a cartridge according to an embodiment of the present disclosure.
FIG. 11 is a view showing that a second inclined part is provided in a fixing part and an inner case of a cartridge according to an embodiment of the present disclosure.
FIG. 12 is a view illustrating that a first packing protrusion is provided in a first packing member, a first inclined groove is provided in a first inclined part, a second packing protrusion is provided in a second packing member, a second inclined groove is provided in a second inclined part, a packing protrusion is provided in the first packing member, and an inclined groove is provided in an inclined part according to an embodiment of the present disclosure.
FIG. 13 is a view illustrating that a first inclined protrusion is provided in a first inclined part, a first packing groove is provided in a first packing member, a second inclined protrusion is provided in a second inclined part, a second packing groove is provided in a second packing member, an inclined protrusion is provided in an inclined part, and a packing groove is provided in the first packing member according to an embodiment of the present disclosure.
FIG. 14 is a view illustrating an adhesive applied to one side and the other side of a first packing member and one side and the other side of a second packing member according to an embodiment of the present disclosure.
FIG. 15 is a view illustrating an adhesive applied between a first packing member and a first inclined part, between a second packing member and a second inclined part, and between the first packing member and an inclined part according to an embodiment of the present disclosure.
FIG. 16 is a view illustrating that a first reinforcing member is provided in a first packing member and a second reinforcing member is provided in a second packing member according to an embodiment of the present disclosure.
FIG. 17 is a view illustrating that a pressing unit is provided in an end cap according to an embodiment of the present disclosure, which shows a feature of pressing one side of a first packing member through the pressing unit.

### Mode for the Invention

The present specification will be described more fully hereinafter with reference to the accompanying drawings, in which embodiments according to the present disclosure are shown, and the principle of the present disclosure is described so that the embodiments may be practiced by those skilled in the art. The disclosed embodiments may be implemented in various forms.

Expressions such as "including" or "may include" that may be used in various embodiments of the present disclosure indicate the existence of a corresponding function, operation, component, or the like that is disclosed, and do not limit one or more additional functions, operations, components, or the like. In addition, in various embodiments according to the present disclosure, terms such as "comprises," "has," or "consists of" are intended to refer to the presence of features, numbers, steps, operations, components, parts, or combinations thereof described in the specification, but it should be understood that the terms do not preclude the existence or addition of one or more other features, numbers, steps, operations, components, parts, or combinations thereof.

When it is said that a component is "connected and coupled" to another component, it should be understood that said component may be directly connected or coupled to said other component, but that there may also be new other components between said component and said other component. In addition, when it is said that a component is "directly connected" or "directly coupled" to another component, it should be understood that no new component exists between said component and said other component.

The terms first, second, etc. used in the present specification may be used to describe various components, but the components should not be limited by terms. The terms are used only for the purpose of distinguishing one component from other components.

The present disclosure relates to a fuel cell membrane humidifier, and the fuel cell membrane humidifier may improve the sealing power of a packing member by forming an inclined part in each of a fixing part and an inner case of a cartridge, and a midcase. Hereinafter, preferred embodiments of the present disclosure are described in detail with reference to the accompanying drawings.

A fuel cell membrane humidifier 10 according to an embodiment of the present disclosure includes a humidification module 110 and end caps 120.

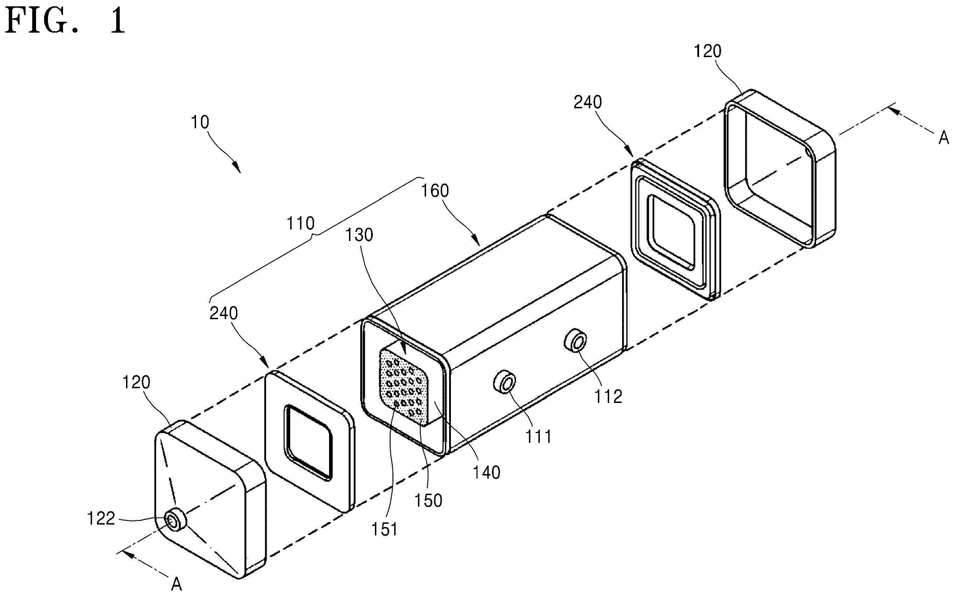

Referring to FIG. 1, the humidification module 110 may humidify gas to be supplied to a fuel cell stack. The humidification module 110 includes a cartridge 130 in which a plurality of hollow fiber membranes 151 are arranged, and the humidification module 110 may humidify gas to be supplied to the fuel cell stack through the hollow fiber membranes 151.

The humidification module 110 may be provided with an exhaust gas inlet 111 through which high-temperature and high-humidity exhaust gas discharged from a fuel cell stack may be introduced, and an exhaust gas outlet 112 through which the exhaust gas may be discharged.

The end caps 120 are coupled to one side and the other side of the humidification module 110, respectively. The end caps 120 may be provided with an air inlet 121 for supplying dry air to the humidification module 110 and an air outlet 122 for discharging humidified air from the humidification module 110.

Specifically, the air outlet 122 may be provided in the end cap 120 coupled to one side of the humidification module 110, and the air inlet 121 may be provided in the end cap 120 coupled to the other side of the humidification module 110. The air outlet 122 is connected to the fuel cell stack, and humidified air discharged through the air outlet 122 may be supplied to the fuel cell stack.

The high-temperature and high-humidity exhaust gas discharged from the fuel cell stack may be introduced into the humidification module 110 through the exhaust gas inlet 111 provided in the humidification module 110. The exhaust gas introduced into the humidification module 110 supplies moisture to the dry air supplied to the humidification module 110 through the air inlet 121 of the end cap 120.

The exhaust gas that supplied moisture to the dry air may be discharged to the outside through the exhaust gas outlet 112 provided in the humidification module 110. The dry air humidified through the humidification module 110 is discharged through the air outlet 122, and the humidified air is supplied to the fuel cell stack.

According to an embodiment of the present disclosure, the humidification module 110 may include a cartridge 130, a midcase 160, and first packing members 240.

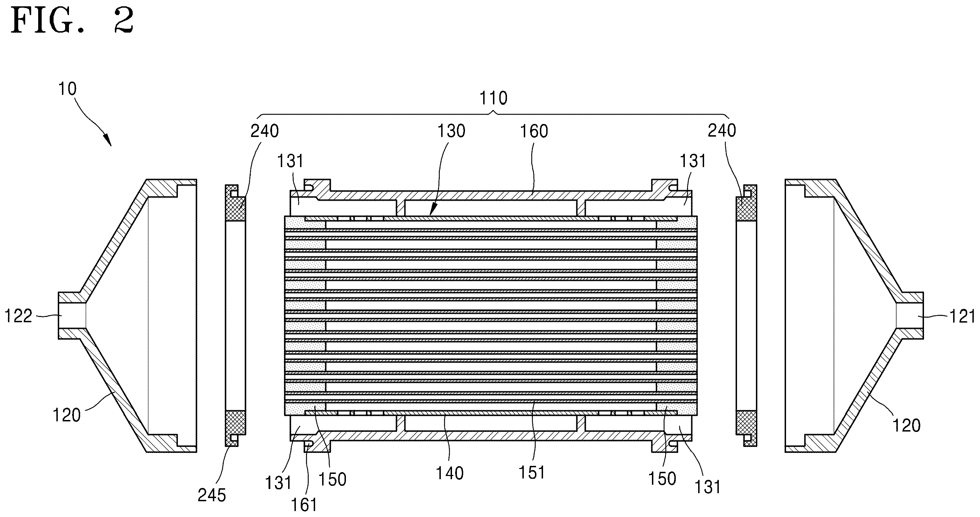

Referring to FIGS. 1 and 2, the cartridge 130 may include an inner case 140 in which a plurality of hollow fiber membranes 151 are arranged, and a fixing part 150 configured to fix the plurality of hollow fiber membranes at either side of the inner case 140.

The inner case 140 may be a case in which a space is provided therein, and the plurality of hollow fiber membranes 151 may be arranged in the inner space of the inner case 140. The fixing part 150 fixes the plurality of hollow fiber membranes 151 to the inner case 140 at either side of the inner case 140, and the fixing part 150 may include a potting layer.

The fixing part 150 may be formed at one-side ends of the plurality of hollow fiber membranes 151, and one-side ends of the plurality of hollow fiber membranes 151 may be fixed to one side of the inner case 140 through the fixing part 150.

In addition, the fixing part 150 may fix the plurality of hollow fiber membranes 151 to the inner case 140 at the other side of the inner case 140. The fixing part 150 may be formed at the other-side ends of the plurality of hollow fiber membranes 151, and the other-side ends of the plurality of hollow fiber membranes 151 may be fixed to the other side of the inner case 140 through the fixing part 150.

The fixing part 150 may isolate the inner space of the inner case 140, and when the fixing parts 150 are provided at one side and the other side of the inner case 140, dry air may move only through the hollow of the hollow fiber membranes 151.

Referring to FIGS. 1 and 2, the cartridge 130 is arranged inside the midcase 160. The midcase 160 may be a case having a space therein, and the cartridge 130 may be arranged in the inner space of the midcase 160.

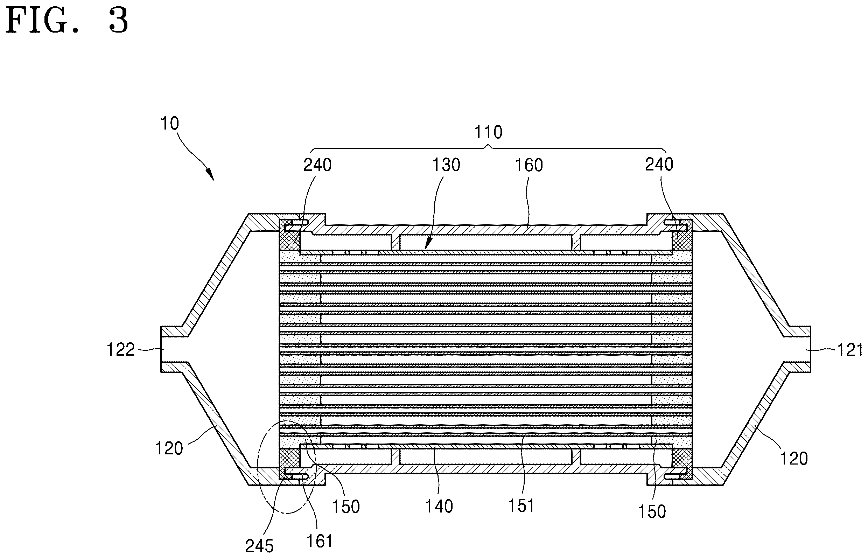

Referring to FIGS. 2 and 3, the first packing members 240 are respectively inserted into first insertion grooves 131 formed between the cartridge 130 and the midcase 160 to seal a gap between the cartridge 130 and the midcase 160.

The first packing members 240 may prevent the dry air supplied through the end cap 120 and the exhaust gas supplied to the humidification module 110 from being directly mixed with each other.

Referring to FIG. 3, the first packing members 240 may be provided at one side and the other side of the cartridge 130 to divide and isolate a point where dry air is introduced and discharged from a point where exhaust gas is introduced and discharged.

The first packing members 240 may be respectively inserted into the first insertion grooves 131 formed between the cartridge 130 and the midcase 160 at one side and the other side of the cartridge 130.

As the first packing members 240 are respectively inserted into the first insertion grooves 131 formed between the cartridge 130 and the midcase 160, the dry air supplied through the end cap 120 and the exhaust gas supplied through the humidification module 110 may be prevented from being directly mixed with each other by dividing the point where dry air is introduced and discharged and the exhaust gas is introduced and discharged.

The first packing members 240 may include a rubber member, but is not limited thereto, and the first packing members 240 may include various members. For example, the first packing members 240 may include a soft member, a hard member, or a metal member.

When the first packing members 240 are inserted into the first insertion grooves 131, the first packing members 240 may be connected with and fixed to the midcase 160. Specifically, the first packing members 240 may be provided with coupling parts 245 that may be inserted into coupling grooves 161 provided in the midcase 160.

Specifically, as the coupling parts 245 of the first packing members 240 are inserted into the coupling grooves 161 of the midcase 160, the first packing members 240 may be connected with and fixed to the midcase 160.

When dividing, through the first packing members 240, a point where dry air is introduced and discharged and a point where exhaust gas is introduced and discharged, if leakage occurs between the first packing members 240 and the cartridge 130 and between the first packing members 240 and the midcase 160, there is a risk that dry air and exhaust gas are mixed. To prevent this, it is necessary to improve the sealing power of the first packing members 240.

In order to improve the sealing power of the first packing member 240, the membrane humidifier 10 for a fuel cell according to an embodiment of the present disclosure may include a first inclined part 210 on an outer side of the cartridge 130 being in contact with the first packing member 240.

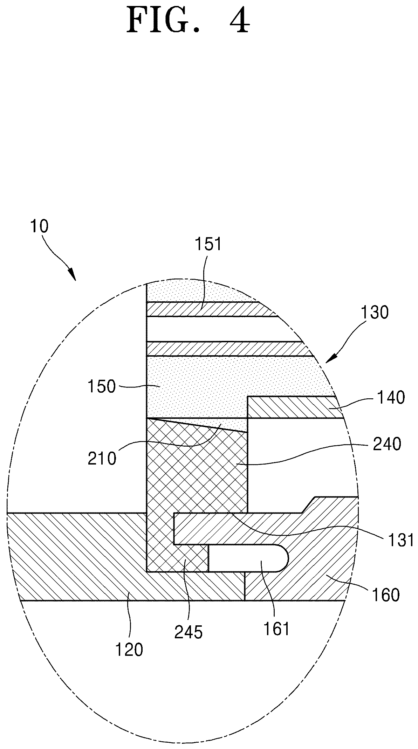

Referring to FIG. 4, the first inclined part 210 may be inclined at one side of the cartridge 130 to reduce a width of the first insertion groove 131 in an inner direction of the cartridge 130.

As the first inclined part 210 is formed in the cartridge 130, the width of the first insertion groove 131 decreases from one side of the cartridge 130 toward the inside of the cartridge 130.

As the width of the first insertion groove 131 is narrowed, the first packing member 240 may be forcibly fitted into the first insertion groove 131. In addition, as the width of the first insertion groove 131 narrows, the inner surface of the first insertion groove 131 presses the first packing member 240, thereby improving the sealing power of the first packing member 240.

According to an embodiment of the present disclosure, the first inclined part 210 may be provided on an outer side of the fixing part 150 of the cartridge 130. Referring to FIG. 4, the first inclined part 210 may be formed on an outer side of the fixing part 150 including a potting layer to reduce the width of the first insertion groove 131.

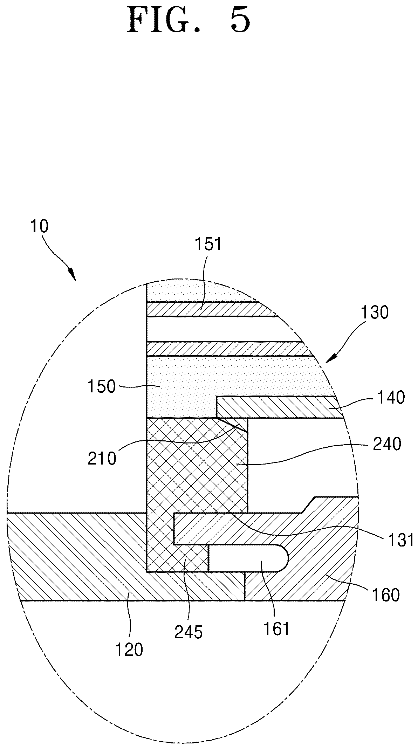

In addition, according to an embodiment of the present disclosure, the first inclined part 210 may be provided in the inner case 140 of the cartridge 130. Referring to FIG. 5, the first inclined part 210 may be formed on an outer side of the inner case 140 to reduce the width of the first insertion groove 131.

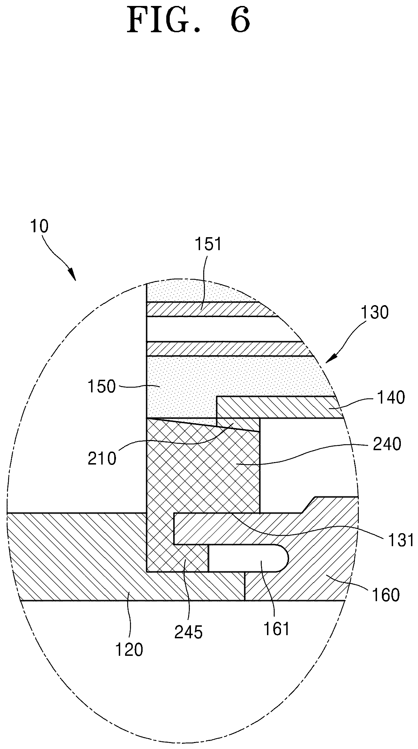

In addition, according to an embodiment of the present disclosure, the first inclined part 210 may be simultaneously provided in the fixing part 150 and the inner case 140 of the cartridge 130. Referring to FIG. 6, the first inclined part 210 may be formed at an outer side of the fixing part 150 including a potting layer and an outer side of the inner case 140 to reduce a width of the first insertion groove 131.

When the first inclined part 210 is formed at the outer side the fixing part 150 and the outer side of the inner case 140, the first inclined part 210 may form a continuous slope.

The fuel cell membrane humidifier 10 according to an embodiment of the present disclosure may include an inclined part 230 on an outer side of the midcase 160 being in contact with the first packing member 240.

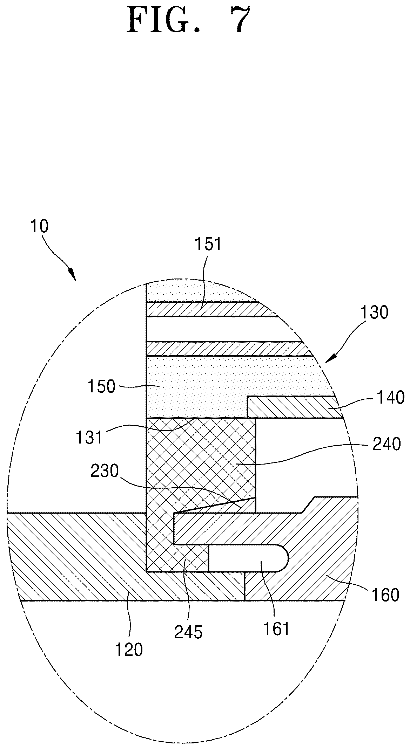

Referring to FIG. 7, as the inclined part 230 is formed in the midcase 160, the width of the first insertion groove 131 decreases from one side of the midcase 160 toward the inside of the midcase 160.

As the width of the first insertion groove 131 is narrowed, the first packing member 240 may be forcibly fitted into the first insertion groove 131. In addition, as the width of the first insertion groove 131 narrows, the inner surface of the first insertion groove 131 presses the first packing member 240, thereby improving the sealing power of the first packing member 240.

According to an embodiment of the present disclosure, as shown in FIGS. 4 to 6, the first inclined part 210 may be provided only on an outer side of the cartridge 130. In addition, according to an embodiment of the present disclosure, the inclined part 230 may be provided only on an outer side of the midcase 160 as shown in FIG. 7.

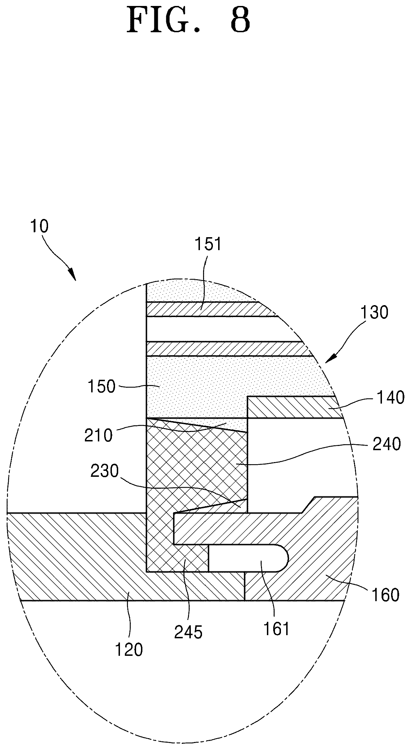

In addition, according to an embodiment of the present disclosure, as shown in FIG. 8, the first inclined part 210 may be provided on an outer side of the cartridge 130, and an inclined part 230 may be provided on an outer side of the midcase 160.

The fuel cell membrane humidifier 10 according to an embodiment of the present disclosure may include a plurality of cartridges 130. According to an embodiment, a plurality of cartridges 130 may be arranged inside the midcase 160.

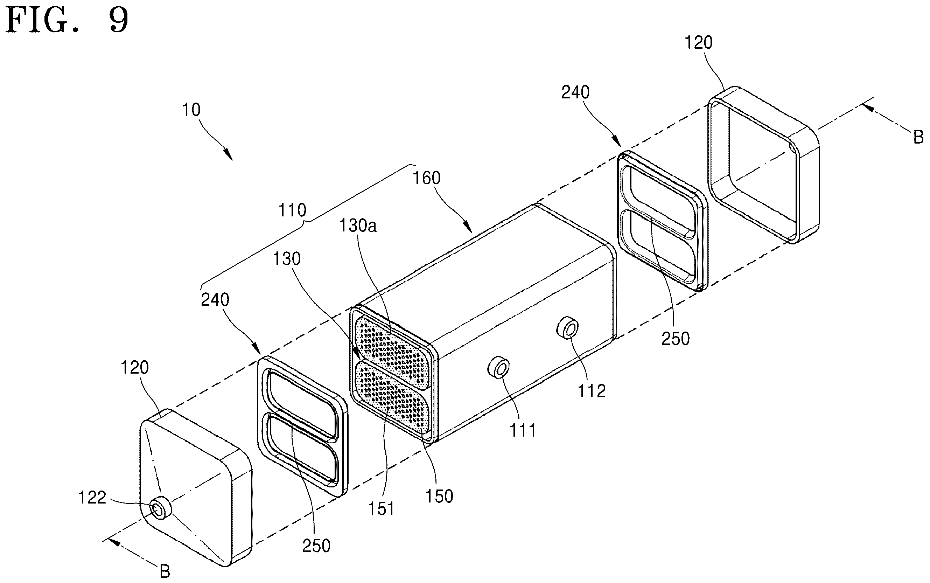

Referring to FIG. 9, the two cartridges 130 and 130a may be arranged in the midcase 160. However, embodiments are not limited thereto, and the number of cartridges 130 arranged inside the midcase 160 may be changed.

When a plurality of cartridges 130 are arranged inside the midcase 160, the humidification module 110 according to an embodiment of the present disclosure may include second packing members 250 respectively inserted into second insertion grooves 132 formed between the plurality of cartridges 130 to seal a gap between the plurality of cartridges 130.

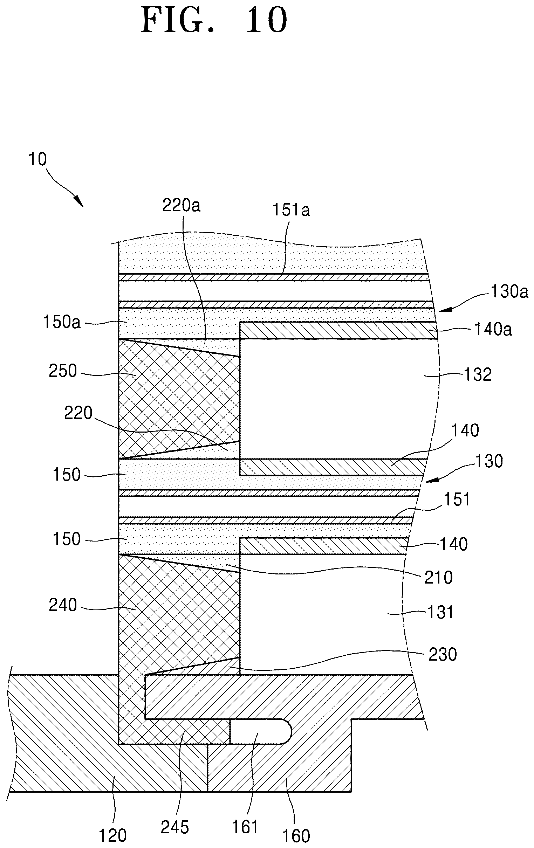

Referring to FIGS. 9 and 10, the second packing member 250 is inserted into the second insertion groove 132 formed between the two cartridges 130 and 130a to seal a gap between the two cartridges 130 and 130a.

The second packing members 250 may prevent the dry air supplied through the end cap 120 and the exhaust gas supplied to the humidification module 110 from being directly mixed with each other.

Referring to FIGS. 9 and 10, the second packing members 250 may be provided at one side and the other side of the cartridge 130 to divide and isolate a point where dry air is introduced and discharged from a point where exhaust gas is introduced and discharged. The second packing member 250 may be inserted into the second insertion groove 132 formed between the two cartridges 130 and 130a at one side and the other side of the cartridge 130.

As the second packing member 250 is inserted into the second insertion groove 132 formed between the cartridges 130 and 130a, the dry air supplied through the end cap 120 and the exhaust gas supplied through the humidification module 110 may be prevented from being directly mixed with each other by dividing the point where dry air is introduced and discharged and the exhaust gas is introduced and discharged.

The second packing members 250 may include a rubber member, but is not limited thereto, and the second packing members 250 may include various members. For example, the second packing members 250 may include a soft member, a hard member, or a metal member.

When dividing, through the second packing member 250, a point where dry air is introduced and discharged and a point where exhaust gas is introduced and discharged, if leakage occurs between the second packing member 250 and the plurality of cartridges 130, there is a risk that dry air and exhaust gas are mixed. To prevent this, it is necessary to improve the sealing power of the second packing members 250.

In order to improve the sealing power of the second packing member 250, the fuel cell membrane humidifier 10 according to an embodiment of the present disclosure may include a second inclined part 220 on an outer side of the cartridge 130 being in contact with the second packing member 250.

Referring to FIG. 10, the second inclined part 220 may be inclined at one side of the cartridge 130 to reduce a width of the second insertion groove 132 in an inner direction of the cartridge 130. The second inclined parts 220 and 220a may be provided on the two cartridges 130 and 130a, respectively.

As the second inclined part 220 is formed in the cartridge 130, the width of the second insertion groove 132 decreases from one side of the cartridge 130 toward the inside of the cartridge 130.

As the width of the second insertion groove 132 is narrowed, the second packing member 250 may be forcibly fitted into the second insertion groove 132. In addition, as the width of the second insertion groove 132 narrows, the inner surface of the second insertion groove 132 presses the second packing member 250, thereby improving the sealing power of the second packing member 250.

According to an embodiment of the present disclosure, the second inclined part 220 may be provided on an outer side of the fixing part 150 of the cartridge 130. In this case, the second inclined parts 220 and 220a may be provided on the two fixing parts 150 and 150a provided in the two cartridges 130 and 130a, respectively.

Referring to FIG. 10, the second inclined part 220 may be formed on an outer side of the fixing part 150 including a potting layer to reduce the width of the second insertion groove 132.

In addition, according to an embodiment of the present disclosure, the second inclined part 220 may be provided in the inner case 140 of the cartridge 130. In this case, the second inclined parts 220 and 220a may be provided on the two inner cases 140 and 140a provided in the two cartridges 130 and 130a, respectively. The second inclined part 220 may be formed on an outer side of the inner case 140 to reduce the width of the second insertion groove 132.

In addition, according to an embodiment of the present disclosure, the second inclined part 220 may be simultaneously provided in the fixing part 150 and the inner case 140 of the cartridge 130. In this case, the second inclined parts 220 and 220a may be provided on the two fixing parts 150 and 150a and the two inner cases 140 and 140a provided in the two cartridges 130 and 130a, respectively. The second inclined part 220 may be formed on an outer side of the inner case 140 to reduce the width of the second insertion groove 132.

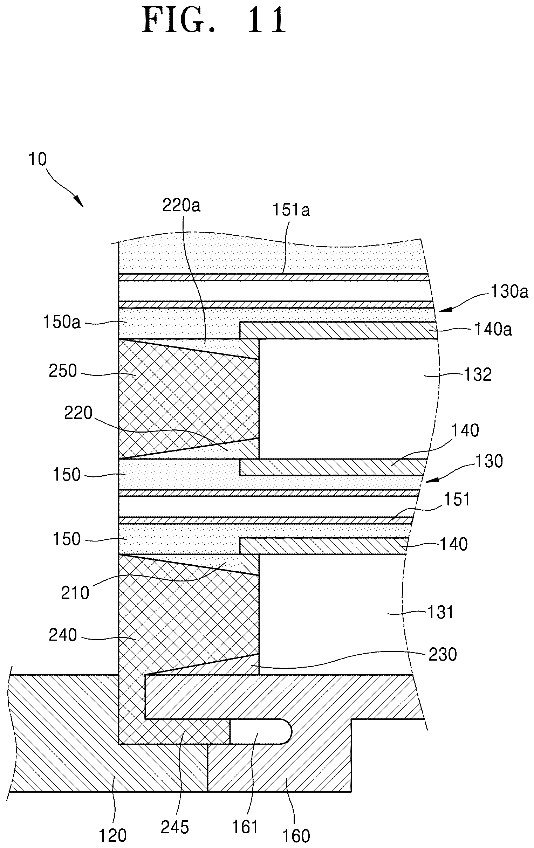

Referring to FIG. 11, the second inclined part 220 may be formed at an outer side of the fixing part 150 including a potting layer and an outer side of the inner case 140 to reduce a width of the second insertion groove 132.

When the second inclined part 220 is formed at the outer side the fixing part 150 and the outer side of the inner case 140, the second inclined part 220 may form a continuous slope.

The fuel cell membrane humidifier 10 according to an embodiment of the present disclosure may include an inclined part 230 on an outer side of the midcase 160 being in contact with the first packing member 240.

According to an embodiment of the present disclosure, the first inclined part 210 and the second inclined part 220 may be provided only on an outer side of the cartridge 130. In addition, according to an embodiment of the present disclosure, the inclined part 230 may be provided only on an outer side of the midcase 160 as shown in FIG. 7.

In addition, according to an embodiment of the present disclosure, as shown in FIG. 11, the first inclined part 210 and the second inclined part 220 may be provided on an outer side of the cartridge 130, and an inclined part 230 may be provided on an outer side of the midcase 160.

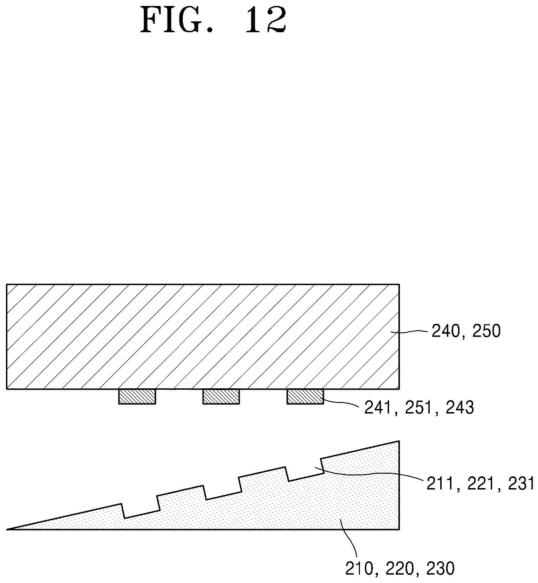

Referring to FIG. 12, the first packing member 240 according to an embodiment of the present disclosure may be provided with a first packing protrusion 241 protruding to the outer side of the first packing member 240 and being in contact with the first inclined part 210. In addition, the first inclined part 210 may be provided with a first inclined groove 211 into which the first packing protrusion 241 is inserted.

The first packing protrusion 241 protrudes outward from the outer surface of the first packing member 240. The first inclined groove 211 may be a groove formed on an outer surface of the first inclined part 210, and the first inclined groove 211 may be a groove into which the first packing protrusion 241 is inserted.

When the first packing member 240 is inserted into the first insertion groove 131 by reducing the width of the first insertion groove 131 through the first inclined part 210, there is a risk that the first packing member 240 is separated while slipping by the first inclined part 210.

The first packing protrusion 241 and the first inclined groove 211 are provided to prevent this, and when the first packing member 240 is inserted into the first insertion groove 131, the first packing protrusion 241 is inserted into the first inclined groove 211.

As the first packing protrusion 241 is inserted into the first inclined groove 211, it is possible to prevent the first packing member 240 from slipping and being separated by the first inclined part 210 through the first packing protrusion 241 and the first inclined groove 211.

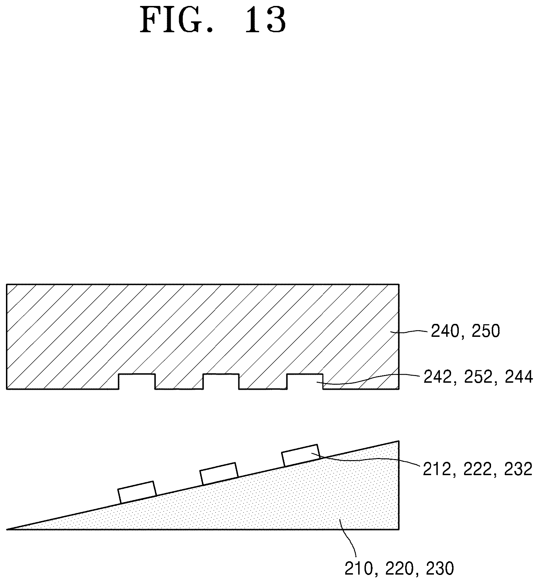

Referring to FIG. 13, the first inclined part 210 according to an embodiment of the present disclosure may include a first inclined protrusion 212 protruding to the outer side of the first inclined part 210 and being in contact with the first packing member 240. In addition, the first packing member 240 may be provided with a first packing groove 242 into which the first inclined protrusion 212 is inserted.

The first inclined protrusion 212 protrudes outward from the outer surface of the first inclined part 210. The first packing groove 242 may be a groove formed in an outer surface of the first packing member 240, and the first packing groove 242 may be a groove into which the first inclined protrusion 212 is inserted.

When the first packing member 240 is inserted into the first insertion groove 131 by reducing the width of the first insertion groove 131 through the first inclined part 210, there is a risk that the first packing member 240 is separated while slipping by the first inclined part 210.

The first inclined protrusion 212 and the first packing groove 242 are provided to prevent this, and when the first packing member 240 is inserted into the first insertion groove 131, the first inclined protrusion 212 is inserted into the first packing groove 242.

As the first inclined protrusion 212 is inserted into the first packing groove 242, it is possible to prevent the first packing member 240 from slipping and being separated by the first inclined part 210 through the first inclined protrusion 212 and the first packing groove 242.

Referring to FIG. 12, the second packing member 250 according to an embodiment of the present disclosure may be provided with a second packing protrusion 251 protruding to the outer side of the second packing member 250 and being in contact with the second inclined part 220. In addition, the second inclined part 220 may be provided with a second inclined groove 221 into which the second packing protrusion 251 is inserted.

The second packing protrusion 251 protrudes outward from the outer surface of the second packing member 250. The second inclined groove 221 may be a groove formed on the outer surface of the second inclined part 220, and the second inclined groove 221 may be a groove into which the second packing protrusion 251 is inserted.

When the second packing member 250 is inserted into the second insertion groove 132 by reducing the width of the second insertion groove 132 through the second inclined part 220, there is a risk that the second packing member 250 is separated while slipping by the second inclined part 220.

The second packing protrusion 251 and the second inclined groove 221 are provided to prevent this, and when the second packing member 250 is inserted into the second insertion groove 132, the second packing protrusion 251 is inserted into the second inclined groove 221.

As the second packing protrusion 251 is inserted into the second inclined groove 221, it is possible to prevent the second packing member 250 from slipping and being separated by the second inclined part 220 through the second packing protrusion 251 and the second inclined groove 221.

Referring to FIG. 13, the second inclined part 220 according to an embodiment of the present disclosure may include a second inclined protrusion 222 protruding to the outer side of the second inclined part 220 and being in contact with the second packing member 250. In addition, the second packing member 250 may be provided with a second packing groove 252 into which the second inclined protrusion 222 is inserted.

The second inclined protrusion 222 protrudes outward from the outer surface of the second inclined part 220. The second packing groove 252 may be a groove formed in an outer surface of the second packing member 250, and the second packing groove 252 may be a groove into which the second inclined protrusion 222 is inserted.

When the second packing member 250 is inserted into the second insertion groove 132 by reducing the width of the second insertion groove 132 through the second inclined part 220, there is a risk that the second packing member 250 is separated while slipping by the second inclined part 220.

The second inclined protrusion 222 and the second packing groove 252 are provided to prevent this, and when the second packing member 250 is inserted into the second insertion groove 132, the second inclined protrusion 222 is inserted into the second packing groove 252.

As the second inclined protrusion 222 is inserted into the second packing groove 252, the second packing member 250 may be prevented from being separated by sliding by the second inclined part 220 through the second inclined protrusion 222 and the second packing groove 252.

Referring to FIG. 12, the first packing member 240 according to an embodiment of the present disclosure may be provided with a packing protrusion 243 protruding to the outer side of the first packing member 240 and being in contact with the inclined part 230 of the midcase 160. In addition, the inclined part 230 of the midcase 160 may be provided with an inclined groove 231 into which the packing protrusion 243 is inserted.

The packing protrusion 243 protrudes outward from the outer surface of the first packing member 240. The inclined groove 231 may be a groove formed on an outer surface of the inclined part 230, and the inclined groove 231 may be a groove into which the packing protrusion 243 is inserted.

When the first packing member 240 is inserted into the first insertion groove 131 by reducing the width of the first insertion groove 131 through the inclined part 230 of the midcase 160, there is a risk that the first packing member 240 is separated while slipping by the inclined part 230.

The packing protrusion 243 and the inclined groove 231 are provided to prevent this, and when the first packing member 240 is inserted into the first insertion groove 131, the packing protrusion 243 is inserted into the inclined groove 231.

As the packing protrusion 243 is inserted into the inclined groove 231, it is possible to prevent the first packing member 240 from slipping and being separated by the inclined part 230 of the midcase 160 through the packing protrusion 243 and the inclined groove 231.

Referring to FIG. 13, an inclined protrusion 232 protruding to the outer side of the inclined part 230 and being in contact with the first packing member 240 may be provided on the inclined part 230 of the midcase 160 according to an embodiment of the present disclosure. In addition, the first packing member 240 may be provided with a packing groove 244 into which the inclined protrusion 232 is inserted.

The inclined protrusion 232 protrudes outward from the outer surface of the inclined part 230 of the midcase 160. The packing groove 244 may be a groove formed in an outer surface of the first packing member 240, and the packing groove 244 may be a groove into which the inclined protrusion 232 is inserted.

When the first packing member 240 is inserted into the first insertion groove 131 by reducing the width of the first insertion groove 131 through the inclined part 230 of the midcase 160, there is a risk that the first packing member 240 is separated while slipping by the inclined part 230.

The inclined protrusion 232 and the packing groove 244 are provided to prevent this, and when the first packing member 240 is inserted into the first insertion groove 131, the inclined protrusion 232 is inserted into the packing groove 244.

As the inclined protrusion 232 is inserted into the packing groove 244, it is possible to prevent the first packing member 240 from slipping and being separated by the inclined part 230 of the midcase 160 through the inclined protrusion 232 and the packing groove 244.

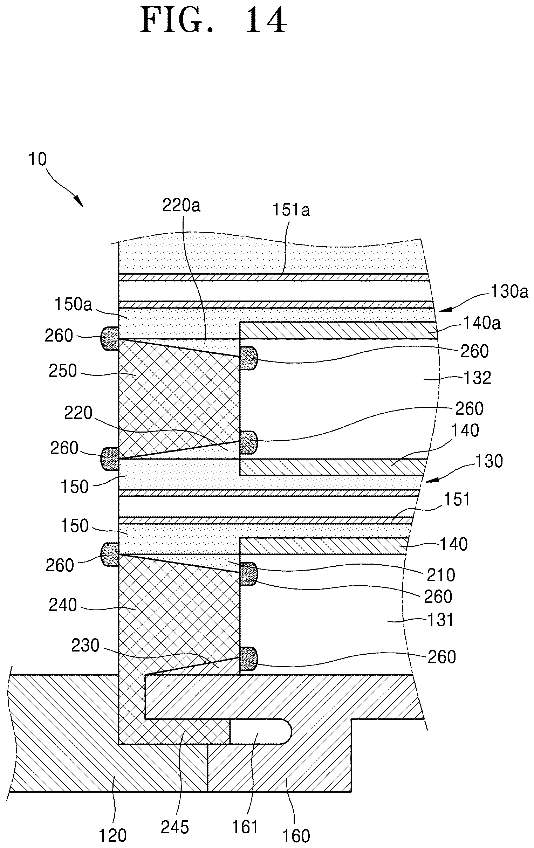

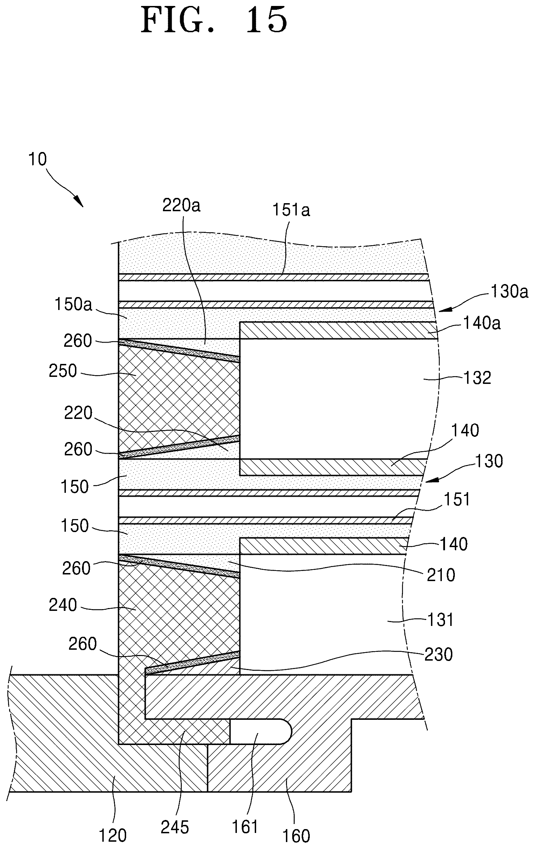

Referring to FIGS. 14 and 15, an adhesive 260 may be provided between the first packing member 240 and the first inclined part 210 according to an embodiment of the present disclosure. As the adhesive 260 is provided between the first packing member 240 and the first inclined part 210, the first packing member 240 may be firmly coupled to the cartridge 130.

The adhesive 260 may include a sealant, but is not limited thereto, and the adhesive 260 may be various types of adhesives.

Referring to FIGS. 14 and 15, the adhesive 260 may be applied to one side of the first packing member 240, the other side of the first packing member 240, and at least one point between the first packing member 240 and the first inclined part 210.

Here, one side of the first packing member 240 may be a direction from the first packing member 240 toward the end cap 120, and the other side of the first packing member 240 may be a direction from the first packing member 240 toward the cartridge 130.

Referring to FIG. 14, when the adhesive 260 is applied to one side of the first packing member 240 or the other side of the first packing member 240, the adhesive 260 may be introduced into a gap generated between the first packing member 240 and the first inclined part 210. Accordingly, the adhesive 260 may be provided between the first packing member 240 and the first inclined part 210.

Referring to FIG. 15, the adhesive 260 may be directly applied between the first packing member 240 and the first inclined part 210, and through this, the adhesive 260 may be provided between the first packing member 240 and the first inclined part 210.

According to an embodiment of the present disclosure, the adhesive 260 may be applied to one side of the first packing member 240, the other side of the first packing member 240, and at least one point between the first packing member 240 and the first inclined part 210, and through this, the adhesive 260 may be provided between the first packing member 240 and the first inclined part 210.

Referring to FIGS. 14 and 15, the adhesive 260 may be provided between the second packing member 250 and the second inclined part 220 according to an embodiment of the present disclosure. As the adhesive 260 is provided between the second packing member 250 and the second inclined part 220, the second packing member 250 may be firmly coupled to the cartridge 130.

The adhesive 260 may include a sealant, but is not limited thereto, and the adhesive 260 may be various types of adhesives.

Referring to FIGS. 14 and 15, the adhesive 260 may be applied to one side of the second packing member 250, the other side of the second packing member 250, and at least one point between the second packing member 250 and the second inclined part 220.

Here, one side of the second packing member 250 may be a direction from the second packing member 250 toward the end cap 120, and the other side of the second packing member 250 may be a direction from the second packing member 250 toward the cartridge 130.

Referring to FIG. 14, when the adhesive 260 is applied to one side of the second packing member 250 or the other side of the second packing member 250, the adhesive 260 may be introduced into a gap generated between the second packing member 250 and the second inclined part 220. Accordingly, the adhesive 260 may be provided between the second packing member 250 and the second inclined part 220.

Referring to FIG. 15, the adhesive 260 may be directly applied between the second packing member 250 and the second inclined part 220, and through this, the adhesive 260 may be provided between the second packing member 250 and the second inclined part 220.

According to an embodiment of the present disclosure, the adhesive 260 may be applied to one side of the second packing member 250, the other side of the second packing member 250, and at least one point between the second packing member 250 and the second inclined part 220, and through this, the adhesive 260 may be provided between the second packing member 250 and the second inclined part 220.

Referring to FIGS. 14 and 15, an adhesive 260 may be provided between the first packing member 240 and the inclined part 230 according to an embodiment of the present disclosure. As the adhesive 260 is provided between the first packing member 240 and the inclined part 230, the first packing member 240 may be firmly coupled to the midcase 160.

The adhesive 260 may include a sealant, but is not limited thereto, and the adhesive 260 may be various types of adhesives.

Referring to FIGS. 14 and 15, the adhesive 260 may be applied to the other side of the first packing member 240, and at least one point between the first packing member 240 and the inclined part 230.

Here, one side of the first packing member 240 may be a direction from the first packing member 240 toward the end cap 120, and the other side of the first packing member 240 may be a direction from the first packing member 240 toward the cartridge 130.

Referring to FIG. 14, when the adhesive 260 is applied to the other side of the first packing member 240, the adhesive 260 may be introduced into a gap generated between the first packing member 240 and the inclined part 230. Accordingly, the adhesive 260 may be provided between the first packing member 240 and the inclined part 230.

Referring to FIG. 15, the adhesive 260 may be directly applied between the first packing member 240 and the inclined part 230, and through this, the adhesive 260 may be provided between the first packing member 240 and the inclined part 230.

According to an embodiment of the present disclosure, the adhesive 260 may be applied to the other side of the first packing member 240 and at least one point between the first packing member 240 and the inclined part 230, and through this, the adhesive 260 may be provided between the first packing member 240 and the inclined part 230.

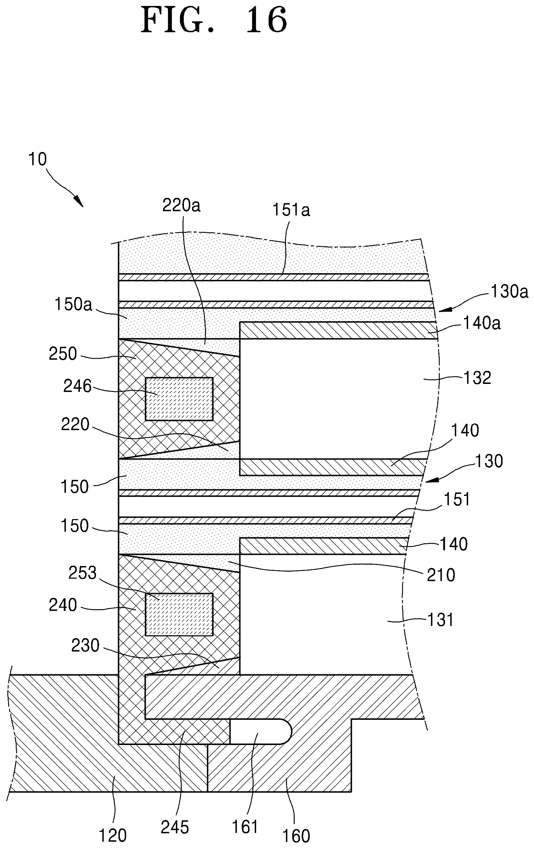

Referring to FIG. 16, a first reinforcing member 246 may be inserted into the first packing member 240 according to an embodiment of the present disclosure. The first reinforcing member 246 may have a hardness higher than the first packing member 240.

The first reinforcing member 246 according to an embodiment of the present disclosure may include metal, but is not limited thereto, and the first reinforcing member 246 may include various materials as long as the first reinforcing member 246 has a hardness higher than the first packing member 240.

When a load is concentrated on the first packing member 240, the sealing power of the first packing member 240 may be deteriorated while the first packing member 240 is deformed. The first reinforcing member 246 is provided to prevent this, and deformation of the first packing member 240 may be prevented by inserting, into the first packing member 240, the first reinforcing member 246 having a higher hardness than the first packing member 240. By preventing the deformation of the first packing member 240, it is possible to prevent the sealing power of the first packing member 240 from being lowered.

According to an embodiment of the present disclosure, when the first inclined part 210 is provided in the cartridge 130 and the first packing member 240 is inserted into the first insertion groove 131, the first reinforcing member 246 may be inserted into the first packing member 240.

In addition, according to an embodiment of the present disclosure, when the inclined part 230 is provided in the midcase 160 and the first packing member 240 is inserted into the first insertion groove 131, the first reinforcing member 246 may be inserted into the first packing member 240.

Referring to FIG. 16, a second reinforcing member 253 may be inserted into the second packing member 250 according to an embodiment of the present disclosure. The second reinforcing member 253 may have a hardness higher than the second packing member 250.

The second reinforcing member 253 according to an embodiment of the present disclosure may include metal, but is not limited thereto, and the second reinforcing member 253 may include various materials as long as the second reinforcing member 253 has a hardness higher than the second packing member 250.

If a load is concentrated on the second packing member 250, deformation occurs in the second packing member 250, and the sealing power of the second packing member 250 may be lowered. The second reinforcing member 253 is provided to prevent this, and deformation of the second packing member 250 may be prevented by inserting, into the second packing member 250, the second reinforcing member 253 having a higher hardness than the second packing member 250. By preventing the deformation of the second packing member 250, it is possible to prevent the sealing power of the second packing member 250 from being lowered.

According to an embodiment of the present disclosure, when the second inclined part 220 is provided in the cartridge 130 and the second packing member 250 is inserted into the second insertion groove 132, the second reinforcing member 253 may be inserted into the second packing member 250.

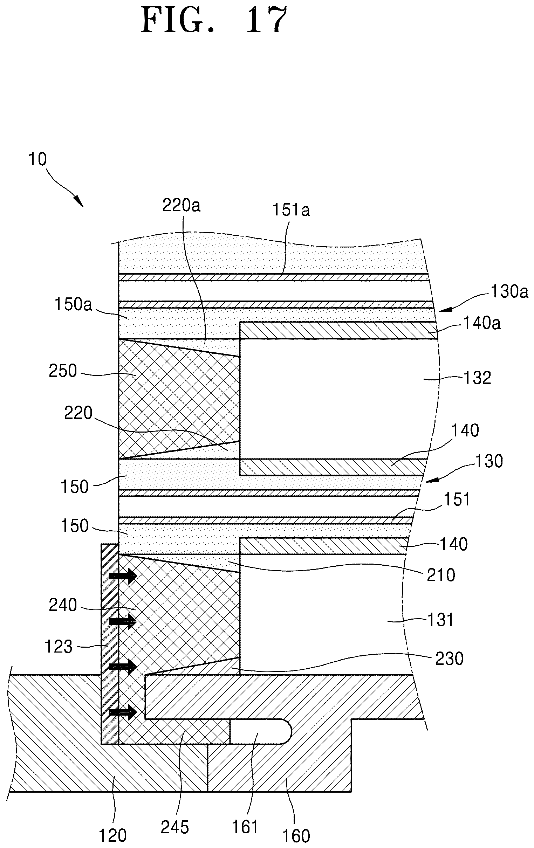

Referring to FIG. 17, the end cap 120 according to an embodiment of the present disclosure may include a pressing part 123 protruding to an inner space of the end cap 120. When the end cap 120 is coupled to the humidification module 110, the pressing part 123 presses the first packing member 240 while coming into contact with the first packing member 240.

Specifically, when the end cap 120 is coupled to the humidification module 110, the pressing part 123 may be in contact with the side surface of the first packing member 240. Referring to FIG. 17, the other side of the first packing member 240 may be in contact with at least one of the first inclined part 210 provided in the cartridge 130 and the inclined part 230 provided in the midcase 160. In this way, the other side of the first packing member 240 may be supported by the first inclined part 210 and the inclined part 230.

The pressing part 123 of the end cap 120 may press one side of the first packing member 240 while being in contact with one side of the first packing member 240 when the end cap 120 is coupled to the humidification module 110.

The other side of the first packing member 240 according to an embodiment of the present disclosure may be supported by the first inclined part 210 and the inclined part 230, and one side of the first packing member 240 may be pressed by the pressing part 123 of the end cap 120 so that the first packing member 240 may be in close contact between the cartridge 130 and the midcase 160, thereby improving the sealing power of the first packing member 240.

The pressing part 123 may be formed in a plate shape protruding to an inner space of the end cap 120, but is not limited thereto, and may be formed in various shapes as long as the pressing part 123 may press the first packing member 240 while being in contact with the first packing member 240.

The fuel cell membrane humidifier according to an embodiment of the present disclosure described above has the following effects.

The fuel cell membrane humidifier according to an embodiment of the present disclosure may improve the sealing power of a packing member by forming an inclined part in each of a fixing part and an inner case of a cartridge, and a midcase.

In addition, in the fuel cell membrane humidifier according to an embodiment of the present disclosure, the packing member may be closely adhered between the cartridge and the midcase and between the cartridge and the cartridge through the inclined parts formed in the fixing part and the inner case of the cartridge, and the midcase, thereby improving the sealing power of the packing member.

Although the present disclosure has been described with reference to embodiments illustrated in the drawings, this is merely an example, and it will be understood by those skilled in the art that various modifications and variations may be made therefrom. Therefore, the true technical protection scope of the present disclosure should be determined by the technical spirit of the appended claims.

## Claims

1. A fuel cell membrane humidifier comprising:
a humidification module for humidifying a gas to be supplied to a fuel cell stack; and
an end cap coupled to one or the other side of the humidification module, wherein
the humidification module comprises:
a cartridge including an inner case in which a plurality of hollow fiber membranes are placed, and a fixing part that fixes the plurality of hollow fiber membranes on one side of the inner case;
a midcase in which the cartridge is placed; and
a first packing member inserted into a first insertion groove formed between the cartridge and the midcase to seal a gap between the cartridge and the midcase, and
a first inclined part is provided on an outer side of the cartridge being in contact with the first packing member.

2. The fuel cell membrane humidifier of claim 1, wherein
the first inclined part is provided in the fixing part of the cartridge or in the inner case of the cartridge.

3. The fuel cell membrane humidifier of claim 1, wherein
the first packing member comprises a first packing protrusion protruding to the outer side of the first packing member and being in contact with the first inclined part, and
the first inclined part comprises a first inclined groove into which the first packing protrusion is inserted.

4. The fuel cell membrane humidifier of claim 1, wherein
the first inclined part comprises a first inclined protrusion protruding to the outer side of the first inclined part and being in contact with the first packing member, and
the first packing member comprises a first packing groove into which the first inclined protrusion is inserted.

5. The fuel cell membrane humidifier of claim 1, wherein
an adhesive is provided between the first packing member and the first inclined part, and
the adhesive is applied to one side of the first packing member, the other side of the first packing member, and at least one point between the first packing member and the first inclined part.

6. The fuel cell membrane humidifier of claim 1, wherein
a first reinforcing member is inserted into the first packing member, and
the first reinforcing member has a higher hardness than the first packing member.

7. The fuel cell membrane humidifier of claim 1, wherein
the end cap comprises a pressing part protruding to an inner space of the end cap, and
when the end cap is coupled to the humidification module, the pressing part presses the first packing member while being in contact with the first packing member.

8. The fuel cell membrane humidifier of claim 1, wherein
a plurality of cartridges are arranged inside the midcase,
the humidification module comprises a second packing member which is inserted into a second insertion groove formed between the plurality of cartridges to seal gaps between the plurality of cartridges, and
a second inclined part is provided on an outer side of the cartridge being in contact with the second packing member.

9. The fuel cell membrane humidifier of claim 8, wherein
the second inclined part is formed to have an inclination at one side of the cartridge to narrow a width of the second insertion groove along an inner direction of the cartridge.

10. The fuel cell membrane humidifier of claim 8, wherein
the second inclined part is provided in the fixing part of the cartridge or in the inner case of the cartridge.

11. The fuel cell membrane humidifier of claim 8, wherein
the second packing member comprises a second packing protrusion protruding to the outer side of the second packing member and being in contact with the second inclined part, and
the second inclined part comprises a second inclined groove into which the second packing protrusion is inserted.

12. The fuel cell membrane humidifier of claim 8, wherein
the second inclined part comprises a second inclined protrusion protruding to the outer side of the second inclined part and being in contact with the second packing member, and
the second packing member comprises a second packing groove into which the second inclined protrusion is inserted.

13. The fuel cell membrane humidifier of claim 8, wherein
an adhesive is provided between the second packing member and the second inclined part, and
the adhesive is applied to one side of the second packing member, the other side of the second packing member, and at least one point between the second packing member and the second inclined part.

14. The fuel cell membrane humidifier of claim 8, wherein
a second reinforcing member is inserted into the second packing member, and
the second reinforcing member has a higher hardness than the second packing member.

15. A fuel cell membrane humidifier comprising:
a humidification module for humidifying a gas to be supplied to a fuel cell stack; and
a first cap coupled to one end of the humidification module, wherein
the humidification module comprises:
a cartridge including an inner case in which a plurality of hollow fiber membranes are placed, and a fixing part that fixes the plurality of hollow fiber membranes on one side of the inner case;
a midcase to which the cartridge is coupled; and
a first packing member inserted into a first insertion groove formed between the cartridge and the midcase to seal a gap between the cartridge and the midcase, and
an inclined part is provided on an outer side of the midcase being in contact with the first packing member.

16. The fuel cell membrane humidifier of claim 15, wherein
the first packing member comprises a packing protrusion protruding to the outer side of the first packing member and being in contact with the inclined part, and
the inclined part comprises an inclined groove into which the packing protrusion is inserted.

17. The fuel cell membrane humidifier of claim 15, wherein
the inclined part comprises an inclined protrusion protruding to the outer side of the inclined part and being in contact with the first packing member, and
the first packing member comprises a packing groove into which the inclined protrusion is inserted.

18. The fuel cell membrane humidifier of claim 15, wherein
an adhesive is provided between the first packing member and the inclined part, and
the adhesive is applied to the other side of the first packing member, and at least one point between the first packing member and the inclined part.

19. The fuel cell membrane humidifier of claim 15, wherein
a first reinforcing member is inserted into the first packing member, and
the first reinforcing member has a higher hardness than the first packing member.

20. The fuel cell membrane humidifier of claim 15, wherein
the first cap comprises a pressing part protruding to an inner space of the first cap, and
when the first cap is coupled to the humidification module, the pressing part presses the first packing member while being in contact with the first packing member.
